# EUROPÄISCHE PATENTSCHRIFT

(11) **EP 0 431 360 B1**
(45) Veröffentlichungstag und Bekanntmachung des Hinweises auf die Patenterteilung: **05.07.1995**
(21) Anmeldenummer: 90121812.3
(22) Anmeldetag: 14.11.1990
(51) Int. Cl.: E04D 13/03, E04D 3/36, B23P 13/04

(54) **Verfahren zum Herstellen von aus zwei Profilelementen zusammengesetzten Befestigungsklammern und unter Anwendung des Verfahrens gefertigte Klammer**
Method for manufacturing fixing clamps composed of two section elements and clamp realised in application of the method
Procédé de fabrication des pinces de fixation composées de deux éléments de profilé et pince réalisée par l'application du procédé

(30) Priorität: 07.12.1989 IT 4176089
(43) Veröffentlichungstag der Anmeldung: 12.06.1991
(73) Patentinhaber: Caoduro, Paolo, I-36010 Zane' (Vicenza) (IT); Caoduro, Carlo, I-36010 Montecello Conte Otto (Vicenza) (IT)
(72) Erfinder: Caoduro, Paolo, I-36010 Zane' (Vicenza) (IT); Caoduro, Carlo, I-36010 Montecello Conte Otto (Vicenza) (IT)
(74) Vertreter: Grünecker, Kinkeldey, Stockmair & Schwanhäusser Anwaltssozietät

(56) Entgegenhaltungen:
- DE-C- 589 056
- FR-A- 2 067 819
- FR-A- 2 168 106
- FR-A- 2 284 064
- FR-A- 2 414 101
- GB-A- 2 081 355

## Beschreibung

Die Erfindung bezieht sich auf ein Verfahren zum Herstellen von aus zwei Profilelementen zusammengesetzten Befestigungsklammern für die Verwendung insbesondere beim Bau von Lichtdächern und Oberlichtern in Industrie- und Wohnbauten.

Die Fertigung der Profilelemente für derartige Klammern erfolgt derzeit im Formgußverfahren oder durch Formpressen von aus Blech gestanzten Rohlingen.

Für das Formgußverfahren sind für jedes der Profilelemente verschiedene Formwerkzeuge notwendig, in welche eine Metallschmelze, z.B. Aluminium, eingegossen oder eingespritzt wird.

Bei dem an zweiter Stelle genannten bekannten Verfahren werden zunächst Rohlinge von vorbestimmter Länge und Breite aus einem Blech gestanzt. Anschließend werden die Rohlinge dann unter Verwendung von verschiedenen Preßwerkzeugen und Gesenken formgepreßt, um ihnen das jeweils gewünschte Profil zu verleihen.

Bei den vorstehend beschriebenen bekannten Verfahren muß jedes Profilelement unter Verwendung verschiedener Werkzeuge in mehreren aufeinander folgenden Schritten einzeln bearbeitet werden, was zu einem erheblichen Zeit- und Kostenaufwand führt, wobei das Endprodukt unterschiedlich ausfallen kann und nicht immer den an es hinsichtlich Festigkeit und Aussehen gestellten Forderungen zu genügen vermag.

Ein Verfahren zum Herstellen von aus zwei Profilelementen zusammengesetzten Befestigungsklammern für eine Lichtkuppel gemäß dem Oberbegriff des Anspruches 1 ist mit der FR-A-2 168 106 bekannt geworden. Bei diesem bekannten Verfahren werden die beiden Klemmbügel der Befestigungsklammer als längere Profile gefertigt, die anschließend in einzelne Stücke vorgegebener Länge unterteilt werden. Die Zusammensetzung der beiden Klemmstücke erfolgt mittels einer Blattfeder.

Ausgehend von diesem stand der Technik liegt der vorliegenden Erfindung die Aufgabe zugrunde, ein Verfahren zum Herstellen derartiger Befestigungsklammern zu schaffen, mit welchem eine wirtschaftliche Fertigung derartiger Befestigungsklammern mit einer gleichbleibend hohen Qualität des Endproduktes ermöglicht wird.

Diese Aufgabe wird erfindungsgemäß durch den Gegenstand des Anspruches 1 gelöst.

Unter den offensichtlichen Vorteilen des Verfahrens und der unter dessen Anwendung gefertigten Befestigungsklammer sind im Hinblick auf die technischen Merkmale insbesondere die gleichbleibende Qualität der Klammern und in wirtschaftlicher Hinsicht die im Vergleich zu den bekannten Verfahren erzielbare Verringerung des Zeit- und Kostenaufwands für die Fertigung der Klammern zu nennen.

Im folgenden ist ein Ausführungsbeispiel der Erfindung anhand der Zeichnung erläutert. Es zeigen:
- Fig. 1 und 2: Schrägansichten zweier verschiedener, in einem Heiß-Strangpreßverfahren hergestellter Profilstränge, und
- Fig. 3: eine zerlegte Schrägansicht einer aus zwei verschiedenen Profilelementen unter Verwendung von Zubehörteilen zusammengesetzten Befestigungsklammer.

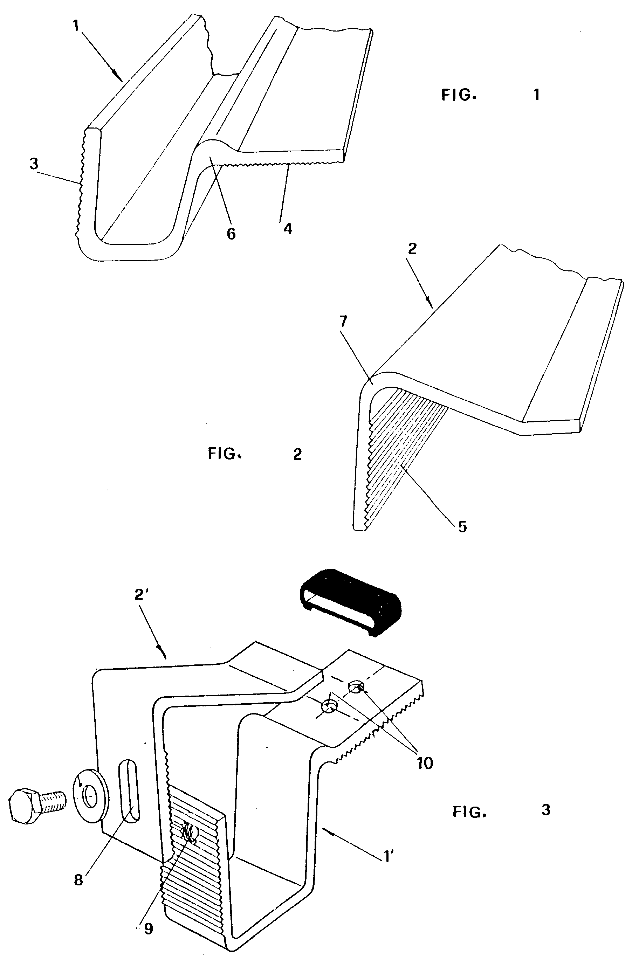

Fig. 1 und 2 zeigen zwei jeweils in einem Heiß-Strangpreßverfahren hergestellte, endlose Profilstränge 1 und 2. Diese haben verschiedene Profilformen mit einer vorbestimmten Basisbreite und sind mit gezahnten Flächenbereichen 3 und 4 bzw. 5 und Rundungen 6 bzw. 7 versehen.

Die gezahnten Flächenbereiche sind dazu bestimmt, die beiden Profilelemente bei ihrem Zusammenbau zu einer Befestigungsklammer gegen Verschiebung relativ zueinander und das untere Profilelement der Klammer bei deren Befestigung am Gerüst eines Lichtdachs oder Oberlichts gegen Verschiebung relativ zu diesem zu sichern.

Von den in der vorstehend beschriebenen Weise hergestellten Profilsträngen werden anschließend Stücke von geeigneter Breite abgeschnitten, so daß man entsprechende Anzahlen von zwei verschiedenen Profilelementen erhält.

Die in Fig. 3 mit 1' und 2' bezeichneten Profilelemente werden dann mit Bohrungen 9 und 10 bzw. 8 versehen.

Im Anschluß an diese Arbeitsgänge werden die Profilelemente, sofern dies vorgesehen ist, anodisiert und/oder lackiert.

Die auf diese Weise fertiggestellten Profilelemente 1' und 2' können dann in der in Fig. 3 gezeigten Weise unter Verwendung von Halte- und Ausrichtschrauben und gegebenenfalls vorgesehenen Besätzen, Dichtungen od. dergl. zu einer fertigen Befestigungsklammer zusammengefügt werden.

Wie aus der vorstehenden Beschreibung zu erkennen ist, ergibt sich aus dem angewendeten Fertigungsverfahren eine gleichbleibend gute Qualität des Produkts und eine hohe Widerstandsfähigkeit der Elemente gegenüber Belastungen. Die an den beiden Profilelementen ausgebildeten gezahnten Flächenbereiche gewährleisten darüber hinaus einen sicheren Sitz und Zusammenhalt der Klammer insgesamt.

Um den Zusammenhalt und die Widerstandsfähigkeit der Klammer noch weiter zu verbessern, können die beiden Profilelemente durch eine zusätzliche Sicherheits-Zugschraube miteinander verbunden werden, welche insbesondere der Versteifung der am stärksten belasteten, an den für den Bau eines Lichtdachs oder Oberlichts verwendeten Kunststoff- oder Glasscheiben angreifenden Teile der Profilelemente dient, um an diesen auftretenden Ermüdungserscheinungen vorzubeugen.

## Patentansprüche

1. Verfahren zum Herstellen von aus zwei Profilelementen zusammengesetzten Befestigungsklammern, für Lichtkuppeln und dgl., wobei zunächst zwei eine vorgegebene Basisbreite aufweisende Profilstränge (1,2) hergestellt werden, deren jeweilige Profilform Abrundungen aufweist, und daß dann von den Profilsträngen einzelne Stücke (1',2') von vorbestimmter Breite abgeschnitten werden, so daß man jeweilige Anzahlen zweier verschiedener Profilelemente erhält,
**dadurch gekennzeichnet,**
daß die Profilelemente als endlose Profilstränge durch Heiß-Strangpressen von z.B. Aluminium hergestellt werden,
daß die Profilform der beiden Profilstränge mit Bohrungen (8,9,10) versehen und sie gegebenenfalls anodisiert und/oder lackiert werden, und
daß die derart gefertigten Profilelemente unter Verwendung von Schrauben zu einer Befestigungsklammer zusammengesetzt werden, wobei gezahnte Flächenbereiche (4,5) die beiden Profilelemente gegen Verschiebung relativ zueinander sichern.

## Claims

1. A method for manufacturing fixing clamps composed of two section elements, for skylights and the like, wherein from two section bars (1, 2), having a predetermined base width and a ribbed section, individual pieces (1', 2') of a predetermined width are cut to obtain two corresponding sets of different section elements, characterized in that said bars are produced as section bars of indefinite length by hot extrusion of, for example, aluminium, said section elements are provided with bores (8, 9, 10) and, if necessary, they are anodized and/or painted, and the section elements produced this way are assembled by means of screws to obtain a fixing clamp, in which toothed portions (4, 5) give the two section elements tightness.

## Revendications

1. Procédé pour la production de pinces de fixation composées de deux élèments profilés pour lucarnes et similaires, dans lequel initialement on produit deux barres profilées (1, 2) de largeur de base pré-établie, dont la section présente des nervures, tel que à partir de ces barres profilées on coupe des pièces individuelles (1' et 2') de largeur pré-établie, afin d'obtenir deux séries correspondantes de divers élèments profilés, caractérisé en ce que ces barres sont produites comme barres profilées de longueur indéfinie au moyen de l'extrusion à chaud, par exemple de l'aluminium, par le fait que sur ces profilés sont prévus des percements (8, 9, 10) et qu'ils seront éventuellement anodisés et/ou vernis et par le fait que les élèments profilés ainsi produits sont assemblés au moyen des vis, afin de réaliser une pince de fixation dans laquelle les parties dentelées (4, 5) assurent la tenue des deux élèments profilés.
